# EUROPEAN PATENT SPECIFICATION

(11) **EP 2 105 648 B1**
(45) Date of publication and mention of the grant of the patent: **16.04.2014**
(21) Application number: 08254111.1
(22) Date of filing: 22.12.2008
(51) Int. Cl.: F16L 59/065

(54) **Vacuum heat insulating material and heat insulating box using the same**
Vakuumwärmeisolationsmaterial und Wärmeisolationskasten, der dieses Material verwendet
Matériau d'isolation thermique sous vide et boîte d'isolation thermique l'utilisant

(30) Priority: 25.03.2008 JP 2008078562
(43) Date of publication of application: 30.09.2009
(73) Proprietor: Mitsubishi Electric Corporation, Chiyoda-ku Tokyo 100-8310 (JP)
(72) Inventor: Iwata, Syuichi, Tokyo 100-8310 (JP); Nomura, Kyoko, Tokyo 100-8310 (JP); Takagi, Tsukasa, Tokyo 100-8310 (JP); Nakano, Hideaki, Tokyo 100-8310 (JP); Tsujihara, Masanori, Tokyo 100-8310 (JP); Abiko, Syohei, Tokyo 100-8310 (JP)
(74) Representative: Nicholls, Michael John

(56) References cited:
- EP-A- 1 724 513
- EP-A- 1 884 704
- WO-A-2007/046614
- JP-A- 2006 017 151

## Description

The present invention relates to a vacuum heat insulating material and a heat insulating box using the same, and more particularly relates to a vacuum heat insulating material having superior handling and heat insulating properties and a heat insulating box using the same.

### 2. Description of the Related Art

Heretofore, as a heat insulating material used for heat insulating boxes of heat/cold retaining apparatuses, such as a refrigerator, a freezer, an automatic vending machine, a cool box, a heat-retaining box, a refrigerator truck, a vehicular air conditioning machine, and a water heater, urethane foam has been widely used. In recent years, in response to market requirements, such as energy saving, space saving, and increase in capacity, a combination of urethane foam and a vacuum heat insulating material in such form that the vacuum heat insulating material having superior heat insulating properties is embedded in urethane foam has started to be used. The vacuum heat insulating material described above is formed such that a powder, a foam body, or a fibrous body is inserted as a core member in a packaging member formed, for example, of an aluminum foil laminate film having gas barrier properties and such that the inside thereof is maintained at a vacuum degree of several pascals.

Handling properties and heat insulating properties of the vacuum heat insulating material considerably depend on a material forming the core member inserted in the packaging member. As the core member of the vacuum heat insulating material, a powder made of silica or the like, a foam body made of urethane or the like, or an aggregate of fibers (fibrous body) has been used in many cases. Among those mentioned above, as a material for the fibers, there have been used inorganic fibers such as glass fibers or ceramic fibers (for example, see Patent Documents 1 and 8); or organic fibers such as polypropylene fibers, polylactic fibers, aramid fibers, liquid crystal polymer (LCP) fibers, polyethylene terephthalate fibers, polyester fibers, polyethylene fibers, or cellulose fibers (for example, see Patent Documents 2 and 7).

Among the fibers mentioned above, the aggregate of glass fibers having significantly superior heat insulating properties has been primarily used as the core member. Hence, a fibrous body formed by aggregating inorganic fibers or organic fibers as described above is used as the core member of the vacuum heat insulating material. As the shape of the fibrous body, for example, there have been disclosed a cotton shape (in the state in which fibers are irregularly tangled with each other), a laminate shape including sheets laminated to each other (for example, see Patent Documents 3 and 4), and a laminate shape in which sheets are laminated to each other so that the fiber directions thereof are perpendicular to each other between adjacent sheets (for example, see Patent Documents 5 and 6).
[Patent Document 1] Japanese Unexamined Patent Application Publication No. 8-028776 (pp. 2 and 3)
[Patent Document 2] Japanese Unexamined Patent Application Publication No. 2002-188791 (pp. 4 to 6 and Fig. 1)
[Patent Document 3] Japanese Unexamined Patent Application Publication No. 2005-344832 (pp. 3 and 4 and Fig. 1)
[Patent Document 4] Japanese Unexamined Patent Application Publication No. 2006-307924 (pp. 5 and 6, and Fig. 2) [Patent Document 5] Japanese Unexamined Patent Application Publication No. 2006-017151 (p. 3 and Fig. 1)
[Patent Document 6] Japanese Examined Patent Application Publication No. 7-103955 (p. 2 and Fig. 2)
[Patent Document 7] Japanese Unexamined Patent Application Publication No. 2006-283817 (pp. 7 and 8)
[Patent Document 8] Japanese Unexamined Patent Application Publication No. 2005-344870 (p. 7 and Fig. 2)

As described above, glass fibers, which are inorganic fibers, are primarily used as the core member of a current vacuum heat insulating material. The glass fibers have hard and fragile properties. Accordingly, glass dust is spread out and adheres to skins and mucous membranes of workers when vacuum heat insulating materials are manufactured, and hence the workers may be irritated in some cases, so that the handling and working properties of the glass have caused problems. In addition, in the case of recycling, for example, a refrigerator itself is pulverized in a recycling work, and glass fibers are provided to thermal recycling together with waste urethane; however, the glass fibers may degrade combustion efficiency or may remain as a residue, and as a result, the recycling efficiency is disadvantageously degraded.

On the other hand, compared to a vacuum heat insulating material using glass fibers as the core member, although a vacuum heat insulating material using organic fibers, such as polyester fibers, as the core member has superior handling and recycling properties, the heat insulating properties thereof are disadvantageously inferior. That is, the coefficient of thermal conductivity, which is an index indicating heat insulating properties, of the vacuum heat insulating material using polyester fibers or the like as the core member is approximately 0.0030 W/mK (see Patent Document 7) and is larger than a coefficient of thermal conductivity of 0.0020 W/mK of a common vacuum heat insulating material using glass fibers as the core member, and hence it is understood that the organic fibers, such as polyester fibers, are inferior to the glass fibers in terms of heat insulating properties.

EP-A2-1724513 discloses a vacuum insulating material on which the precharacterizing portion of claim 1 is based.

Accordingly, the present invention has been conceived to solve the problems described above, and an object of the present invention is to provide a vacuum heat insulating material having superior handling and heat insulating properties and a heat insulating box using the above vacuum heat insulating material.

The present invention provides a vacuum heat insulating material as defined in claim 1. In addition, a heat insulating box according to the present invention comprises the vacuum heat insulating material described above.

The invention will now be described by way of non-limiting examples with reference to the accompanying drawings, in which:
Fig. 1 is a schematic vertical cross-sectional view of the structure of a vacuum heat insulating material according to embodiment 1 of the present invention.
Fig. 2 is a schematic view showing the structure of the vacuum heat insulating material.
Fig. 3 is a schematic enlarged vertical cross-sectional view of the structure of a core member.
Fig. 4 is a table showing measurement results of the coefficient of thermal conductivity of the vacuum heat insulating material.
Fig. 5 is a graph showing the measurement results shown in Fig. 4.

Fig. 6 is a plan view showing a fibrous aggregate used for a vacuum heat insulating material according to embodiment 2 of the present invention.
Fig. 7 is a graph showing measurement results of the coefficient of thermal conductivity of the vacuum heat insulating material formed of fibrous aggregates.
Fig. 8 is a schematic view showing the shape of a fiber forming a fibrous aggregate of a vacuum heat insulating material according to embodiment 3 of the present invention.
Fig. 9 is a table showing measurement results of the coefficient of thermal conductivity of the vacuum heat insulating material formed of fibrous aggregates composed of fibers each having an approximately C shaped cross-section.

Hereinafter, embodiments of the present invention will be described with reference to the drawings.

### Embodiment 1

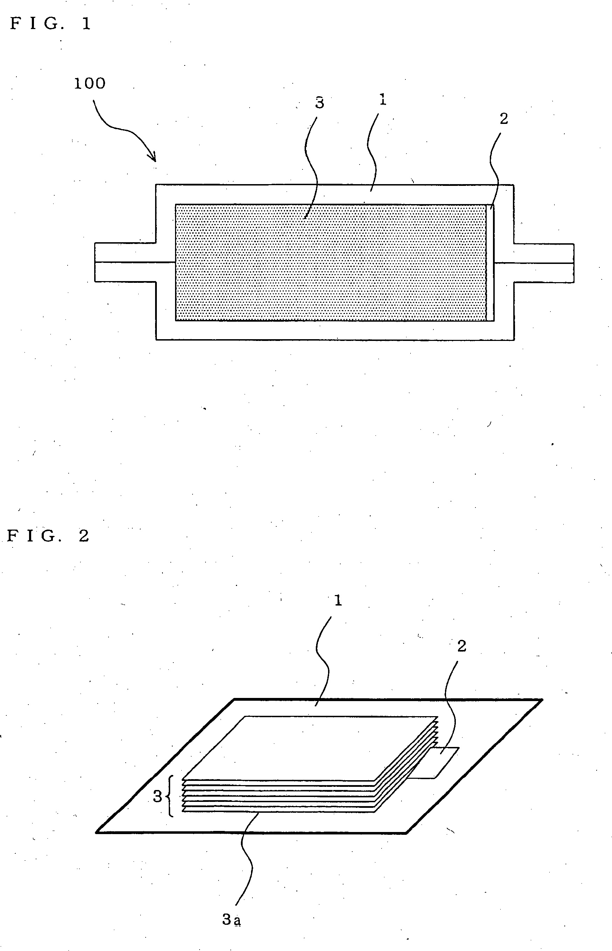

Fig. 1 is a schematic vertical cross-sectional view of the structure of a vacuum heat insulating material 100 according to the embodiment 1 of the present invention. Fig. 2 is a schematic view showing the structure of the vacuum heat insulating material 100. With reference to Figs. 1 and 2, the structure of the vacuum heat insulating material 100 will be described. This vacuum heat insulating material 100 is used for heat insulating boxes of heat/cold retaining apparatuses, such as a refrigerator, a freezer, an automatic vending machine, a cool box, a heat-retaining box, a refrigerator truck, a vehicular air conditioning machine, and a water heater. In addition, the relationship in size among constituent elements shown in the following drawings including Figs. 1 and 2 may be different from the actual relationship in some cases.

As shown in Fig. 1, the vacuum heat insulating material 100 is formed such that a core member 3 and an adsorbent 2 are accommodated in a packaging member 1. The packaging member 1 may be formed, for example, of a plastic laminate film including an aluminum foil having a thickness of approximately 6 µm as a gas barrier layer and a polyethylene film as an innermost sheet layer. That is, as long as the packaging member 1 has gas barrier properties and can maintain the inside thereof in a vacuum state, any material may be used for the packaging member 1. The adsorbent 2 absorbs moisture inside the vacuum heat insulating material 100 and suppresses the degradation with time in vacuum degree inside the vacuum heat insulating material 100. This adsorbent 2 may be formed, for example, such that calcium oxide (CaO) is contained in a non-woven fabric bag.

In the vacuum heat insulating material 100 in which a plastic laminate film is used as the packaging member 1, the core member 3 is responsible to ensure an inner space of the vacuum heat insulating material 100 against the atmospheric pressure and to decrease, for example, the thermal conductance of gas by dividing the inner space into smaller rooms. In this embodiment 1, the core member 3 has a multilayer structure including many fibrous aggregates 3a laminated to each other. In this core member 3, the orientation directions of fibers are aligned approximately perpendicular to the thickness direction of the core member 3 which is a heat insulating direction. In addition, in order to suppress the thermal conductance of gas, the distance of the inner space of the vacuum heat insulating material 100 is preferably set smaller than the free mean path of air molecules at a given degree of vacuum.

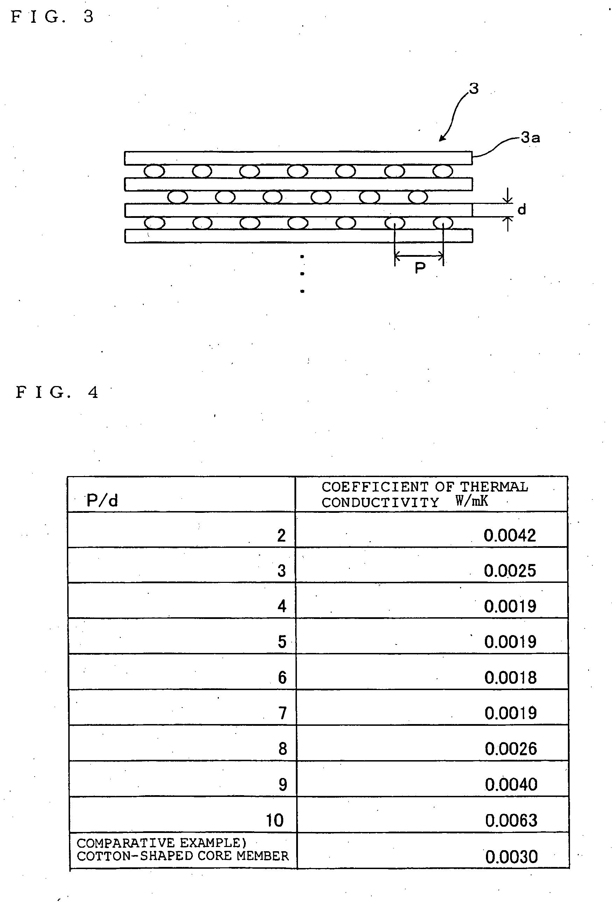

Fig. 3 is a schematic enlarged vertical cross-sectional view of the structure of the core member 3. With reference to Fig. 3, the structure of the core member 3 will be described in detail. As shown in Fig. 3, the core member 3 is formed such that in each of the fibrous aggregates 3a, fibers are aligned in one direction so as not to be overlapped with other in the thickness direction, and such that the fibrous aggregates 3a thus prepared are overlapped with each other so that the directions of fibers of adjacent fibrous aggregates are set approximately perpendicular to each other. In particular, the core member 3 is formed such that the fibrous aggregates 3a each formed of spun fibers disposed in one direction so as not to be overlapped with each other are laminated to each other so that the direction of fibers of one fibrous aggregate is approximately perpendicular to the directions of fibers of fibrous aggregates located adjacent thereto.

Each of the fibrous aggregates 3a may be formed such that a film is molecularly oriented by stretching and is then split into several portions. In the method described above, when the film is split into several portions, without totally separating fibers, connection portions may be allowed to partly remain between the fibers. In addition, when the film thus split is then pulled in a direction perpendicular to the fiber direction, spaces are formed between the fibers, so that the fibrous aggregate 3a can be formed; hence, the handling properties of the core member 3 are improved. As a material for fibers forming the fibrous aggregate 3a, for example, polyester may be used.

Next, the core member 3 thus obtained is inserted in the packaging member 1 made of a plastic laminate film. Subsequently, the packaging member 1 accommodating the core member 3 is dried at a temperature of 100°C for approximately 5 hours. After a non-woven bag containing approximately 5 g of CaO (adsorbent 2) is disposed in the packaging member 1, the packaging member 1 which accommodates the core member 3 and the adsorbent 2 is placed in a vacuum chamber. Subsequently, while the inside of the vacuum chamber is being evacuated to 3 Pa, opening portions of the packaging member 1 are heat-sealed in the vacuum chamber, so that the vacuum heat insulating material 100 as a vacuum heat insulating panel is completed.

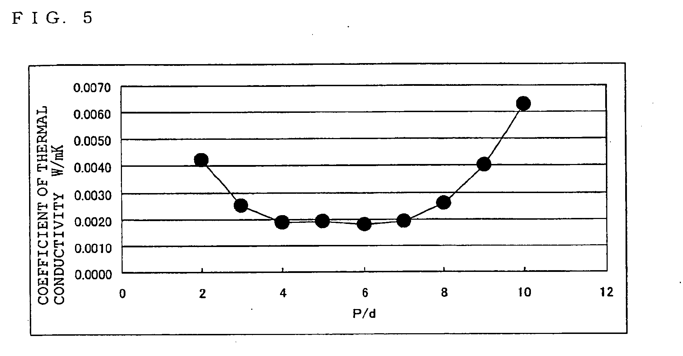

Fig. 4 is a table showing measurement results of the coefficient of thermal conductivity of the vacuum heat insulating material 100. Fig. 5 is a graph showing the measurement results shown in Fig. 4. With reference to Figs. 4 and 5, the measurement results of the coefficient of thermal conductivity for an evaluation of the heat insulation property of the vacuum heat insulating material 100 formed by the method described above will be described. In Figs. 4 and 5, the relationship of the coefficient of thermal conductivity (W/mK) with an average fiber diameter (d) of the vacuum heat insulating material 100 and an average distance (P) between fibers in each fibrous aggregate 3a is shown. In Fig. 4, as a comparative example, the coefficient of thermal conductivity of a vacuum heat insulating material using a core member composed of cotton-shaped fibers (such as polyester fibers) is also shown. In addition, in Fig. 5, the horizontal axis represents the average distance between fibers/the average fiber diameter (P/d), and the vertical axis represents the coefficient of thermal conductivity (W/mK).

From the measurement results shown in Figs. 4 and 5, it is understood that in the range in which the average distance (P) between fibers is 3 to 8 times the average fiber diameter (d), the coefficient of thermal conductivity is smaller than that of the comparative example, that is, the heat insulating properties thereof are superior. The reason for this is believed as follows. In the vacuum heat insulating material of the comparative example in which the cotton-shaped fibers are used for the core member, there are places at which the fibers are aligned in the thickness direction which is the heat insulating direction, and on the other hand, in the vacuum heat insulating material 100 according to this embodiment 1, since the thermal conduction in the thickness direction which is the heat insulating direction can be performed only at intersections between fibers of adjacent fibrous aggregates 3a, the effect of contact thermal resistant can be obtained, and thereby solid thermal conduction through the core member 3 can be suppressed, so that a decrease in coefficient of thermal conductivity, that is, an improvement in heat insulating properties, can be achieved.

On the other hand, when the average distance (P) between fibers is smaller than three times the average fiber diameter (d), it is understood that the coefficient of thermal conductivity is larger than that of the comparative example, that is, the heat insulating properties are degraded. The reasons for this are believed that since the fibers are densely provided as compared to those of the comparative example, the length of the thermal conduction path is decreased and, in addition, that the volume fraction of solid in the vacuum heat insulating material 100 is increased. In addition, when the average distance (P) between fibers is increased (three times or more the average fiber diameter (d)), the volume fraction of solid in the vacuum heat insulating material 100 can be decreased, and the thermal conduction length can be increased; hence, it is understood that the coefficient of thermal conductivity is gradually decreased.

In addition, from the measurement results shown in Figs. 4 and 5, it is understood that when the average distance (P) between fibers is three to seven times the average fiber diameter (d), the coefficient of thermal conductivity is hardly changed and that when the average distance (P) between fibers is more than 8 times the average fiber diameter (d), the coefficient of thermal conductivity is gradually increased, that is, the heat insulating properties are degraded. The reason for this is believed that deflections of fibers between intersections thereof, which function as supporting points, are increased as the average distance (P) between fibers is increased, and as a result, the fibers droop down in the thickness direction and are brought into contact with each other between the fibrous aggregates 3a.

### Embodiment 2

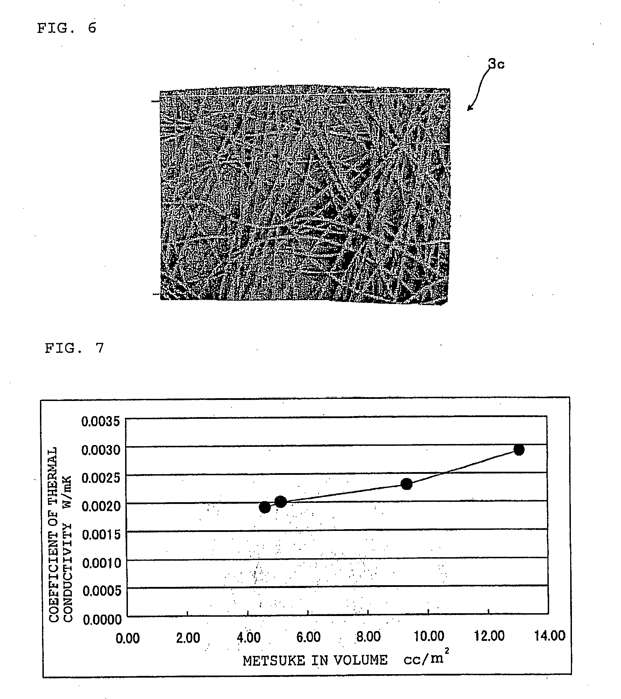

Fig. 6 is a plan view showing a fibrous aggregate 3c used for the vacuum heat insulating material 100 according to the embodiment 2 of the present invention. With reference to Fig. 6, the fibrous aggregate 3c will be described. As shown in Fig. 6, the fibrous aggregate 3c is formed of a long-staple non-woven fabric. Since the fibrous aggregate 3c is formed of a long-staple non-woven fabric as described above, compared to the fibrous aggregate 3a, the productivity is advantageously high. In addition, since fibers do not fall out nor fray so much at end portions of the fibrous aggregate 3c, the handling properties can be further improved.

The non-woven fabric is manufactured such that after a resin melted and ejected from spinning nozzles is cooled with a cold wind, and it is stretched by a stretching apparatus in order to orient molecules in fibers and increase the rigidity, and fibers are then collected on a conveyor and pressurized by rollers while the conveyor is moved at an optional speed, followed by winding. In addition, the diameter of fibers is set to 10 µm so that the coefficient of thermal conductivity of air remaining in the vacuum heat insulating material is less than 0.0001 W/mK. In addition, a non-woven fabric collected on the conveyor may be difficult to be handled when the fibers are randomly separated, and in this case, the fibers may be adhered to each other by applying heat when being pressurized. In this step, since adhesion by excessive application of pressure and temperature may increase a contact area between the fibers and may facilitate thermal conduction, the area of the adhesion is preferably decreased as small as possible and is preferably decreased to 5% or less of the total area. By the method described above, the fibrous aggregates 3c are manufactured so as to have a different fiber density (Metsukes) by adjusting manufacturing conditions such as a conveyor speed, and the vacuum heat insulating material 100 can be obtained by laminating 300 fibrous aggregates 3c in a manner similar to that of the embodiment 1.

Fig. 7 is a graph showing measurement results of the coefficient of thermal conductivity of the vacuum heat insulating material 100 formed of the fibrous aggregates 3c. With reference to Fig. 7, the measurement results of the coefficient of thermal conductivity for an evaluation of the heat insulation property of the vacuum heat insulating material 100 formed of the core member 3 including the fibrous aggregates 3c laminated to each other will be described. In Fig. 7, the horizontal axis represents a fiber density (Metsuke) in volume (cc/m²) and the vertical axis represents the coefficient of thermal conductivity. In general, the fiber density (Metsuke) is represented by a fiber weight per 1 m²; however, in this embodiment; a fiber volume per 1 m² is used as the fiber density (Metsuke) in volume so that materials having different specific gravities can even be compared.

From the measurement results shown in Fig. 7, it is understood that, at a fiber density (Metsuke) of lower than 14 cc/m² (in particular, 13 cc/m²) (see Fig. 4 ), the coefficient of thermal conductivity is smaller than that using a cotton-shaped core member, that is, the heat insulating properties are improved. The reason for this is believed that as the fiber density (Metsuke) is decreased, the thickness of the fibrous aggregate 3c is decreased, so that fibers therein are not likely to be aligned in the thickness direction and are more likely to be aligned in a surface direction which is a direction perpendicular to the heat insulating direction. In addition, it is believed that although the fibers are likely to be aligned in the surface direction as the fiber density (Metsuke) is decreased, when the fiber density (Metsuke) is excessively decreased, the strength of the fibrous aggregate 3c is decreased, and winding can not be performed at a fiber density (Metsuke) of 3.5 cc/m² or less.

### Embodiment 3

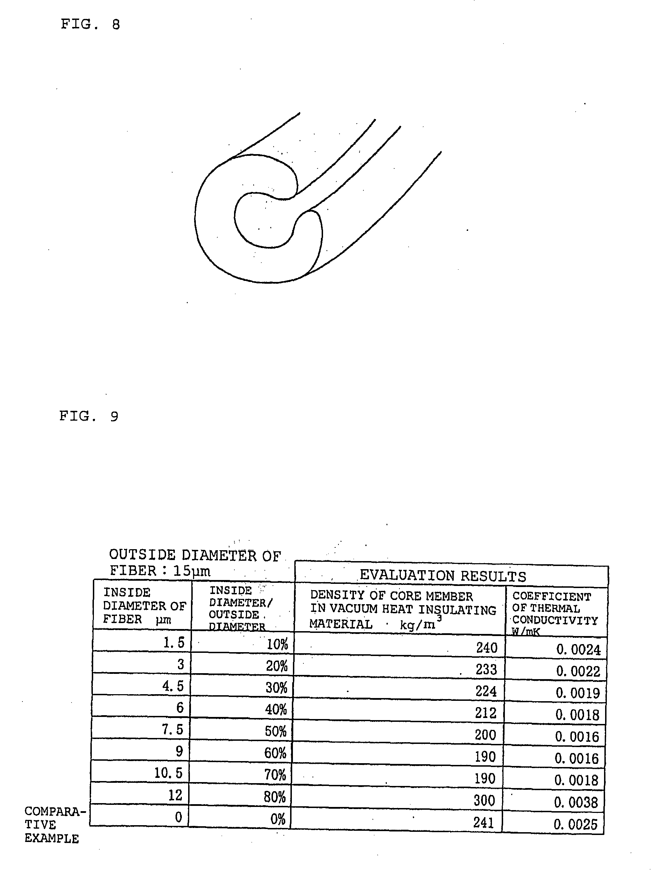

Fig. 8 is a schematic view showing the shape of a fiber 5 forming a fibrous aggregate of the vacuum heat insulating material 100 according to the embodiment 3 of the present invention. With reference to Fig. 8, the fiber 5 forming the fibrous aggregate of the vacuum heat insulating material 100 will be described. As another method for suppressing solid thermal conduction of the core member, a method using hollow fibers has been disclosed in Japanese Unexamined Patent Application Publication No. 2007-285496. However, as the length of the hollow fiber is increased, exhaust properties of a hollow portion is seriously degraded in manufacturing of a vacuum heat insulating panel; hence, the productivity is disadvantageously inferior.

Accordingly, in the embodiment 3, the fiber 5 is formed to have an approximately C shaped cross-section, so that the solid thermal conduction of the core member 3 is suppressed. In this embodiment, the case in which the fibrous aggregate is formed in accordance with the manufacturing method of the embodiment 2 will be described by way of example. As shown in Fig. 8, since the fiber 5 is formed to have an approximately C shaped cross-section, the exhaust properties in an evacuation step of the vacuum heat insulating material can be improved, that is, the evacuation properties can be prevented from being degraded, and the volume fraction of solid in the vacuum heat insulating material can be decreased after vacuum packing as in the case of a hollow fiber; hence, the heat insulating properties can be improved. After 300 fibrous aggregates thus formed are laminated to each other and are inserted in the packaging member 1, by a method similar to that of the embodiment 1, the vacuum heat insulating material 100 can be obtained.

Fig. 9 is a table showing measurement results of the coefficient of thermal conductivity of the vacuum heat insulating material 100 formed of fibrous aggregates composed of the fibers 5 each having an approximately C shaped cross-section. With reference to Fig. 9, the measurement results of the coefficient of thermal conductivity for heat insulation evaluation of the vacuum heat insulating material 100 formed of fibrous aggregates using the fibers 5 will be described. In Fig. 9, as a comparative example, the coefficient of thermal conductivity of a vacuum heat insulating material using a core member formed of fibers each having a circular cross-section is also shown. In this embodiment, the outside diameter and the inside diameter of the fiber 5 are an outside diameter and an inside diameter, respectively, which are obtained in the state where an opening portion of the approximately C shape is closed after vacuum packing. In addition, the density of the core member 3 is obtained by dividing the weight of the fibrous aggregates forming the core member 3 by the inside volume of the vacuum heat insulating material The inside volume of the vacuum heat insulating material is obtained by calculation after the thickness of the packaging member from the external dimension of the vacuum heat insulating material.

From the measurement results shown in Fig. 9, it is understood that when the inside diameter of the fiber 5 is 20% to 70% of the outside diameter of the fiber, the volume fraction of the core member 3 in the vacuum heat insulating material 100 can be decreased, and it can be confirmed that the heat insulating properties are improved as compared to those of fibers each having a solid cross-section. In addition, it is understood that when the inside diameter is 60% to 70% of the outside diameter of the fiber the most superior heat insulating properties can be obtained. In a vacuum heat insulating material used at a degree of vacuum of several to several tens of pascals, since the solid thermal conduction of the core member 3 has a significant influence on the heat insulating properties. Therefore, as the inside diameter of the fiber is increased, the volume fraction of solid with respect to the same outside diameter of the fiber can be effectively decreased.

Accordingly, the heat insulating properties are improved; however, on the other hand, as the inside diameter is increased, the cross-sectional second moment is decreased and the rigidity is decreased; hence, deflection of fibers between intersections thereof used as supporting points is increased and at the same time, crushing of the fibers themselves increasingly occurs at the intersection therebetween. Accordingly, the density of the core member in the vacuum heat insulating material is not decreased as calculated based on a decrease in solid component by an increase in inside diameter and is conversely increased at a density of the core member of 190 kg/m³, which is a lower limit, in the region in which the inside diameter is 60% to 70% of the outside diameter of the fiber; hence, it is believed that the heat insulating properties are degraded.

## Claims

1. A vacuum heat insulating material (100) comprising:
a core member (3) including fibrous aggregates consisting of non-woven fabric (3a, 3b, or 3c) laminated to each other; and
a packaging member (1) which has gas barrier properties, which accommodates the core member (3), and the inside of which is in a vacuum state; **characterized in that**
the non-woven fabric has a fiber volume per square meter of 3.5 to 13 cc/m²;
fibers constituting the fibrous aggregates each have an approximately C shaped cross-section,
the fibers each having an approximately C shaped cross-section each have an inside diameter of 20% to 70% of an outside diameter of the fibers, the inside diameter and the outside diameter of each fiber being obtained in the state in which an opening portion thereof is closed.

2. The vacuum heat insulating material (100) according to Claim 1, further comprising an adsorbent contained in a non-woven bag, wherein the adsorbent contained in the non-woven bag is accommodated in the packaging member.

3. A heat insulating box comprising: the vacuum heat insulating material according to Claim 1 or 2.

## Patentansprüche

1. Vakuumwärmeisoliermaterial (100) mit:
einem Kernteil (3) mit Faseranhäufungen, die aus aufeinander geschichtetem Faservlies (3a, 3b oder 3c) bestehen; und
einem Eigenschaften einer Gasbarriere aufweisenden Verpackungsteil (1), das das Kernteil (3) aufnimmt und dessen Inneres sich in einem Vakuumzustand befindet; **dadurch gekennzeichnet, dass**
das Faservlies ein Faservolumen pro Quadratmeter von 3,5 bis 13 cc/m² aufweist;
die Faseranhäufungen bildenden Fasern jeweils einen annähernd C-förmigen Querschnitt aufweisen,
die jeweils einen annähernd C-förmigen Querschnitt aufweisenden Fasern jeweils einen Innendurchmesser von 20% bis 70% eines Außendurchmessers der Fasern aufweisen, wobei der Innendurchmesser und der Außendurchmesser jeder Faser in dem Zustand erhalten werden, in dem ein Öffnungsabschnitt von ihr geschlossen ist.

2. Vakuumwärmeisoliermaterial (100) gemäß Anspruch 1, weiterhin mit einem in einer Vliestasche enthaltenen Adsorptionsmittel, wobei das in der Vliestasche enthaltende Adsorptionsmittel in dem Verpackungsteil aufgenommen wird.

3. Wärmeisolierkasten mit: dem Vakuumwärmeisoliermaterial gemäß Anspruch 1 oder 2.

## Revendications

1. Matériau d'isolation thermique sous vide (100) comprenant :
un élément d'âme (3) comprenant des agrégats fibreux constitués d'un textile non tissé (3a, 3b, ou 3c) stratifiés les uns aux autres ; et
un membre de conditionnement (1) qui a des propriétés de barrière au gaz, qui loge l'élément d'âme (3), et à l'intérieur duquel se trouve un état sous vide ; **caractérisé en ce que**
le textile non tissé a un volume de fibre par mètre carré de 3,5 à 13 cm³/m² ;
les fibres constituant les agrégats fibreux ont chacune une coupe transversale approximativement en forme de C,
les fibres ayant chacune une coupe transversale approximativement en forme de C ont chacune un diamètre interne de 20 % à 70 % du diamètre externe des fibres, le diamètre interne et le diamètre externe de chaque fibre étant obtenus dans l'état dans lequel leur partie d'ouverture est fermée.

2. Matériau d'isolation thermique sous vide (100) selon la revendication 1, comprenant en outre un adsorbant contenu dans un sac en non-tissé, dans lequel l'adsorbant contenu dans le sac en non-tissé est logé dans le membre de conditionnement.

3. Boîte d'isolation thermique comprenant :
le matériau calorifuge sous vide selon la revendication 1 ou 2.
